# EUROPEAN PATENT SPECIFICATION

(11) **EP 4 021 760 B1**
(45) Date of publication and mention of the grant of the patent: **04.03.2026**
(21) Application number: 20767735.2
(22) Date of filing: 25.08.2020
(51) Int. Cl.: B60Q 1/48

(54) **PARKING ASSISTING METHOD AND SYSTEM FOR MOTOR VEHICLE AND MOTOR VEHICLE**
EINPARKHILFSVERFAHREN UND -SYSTEM FÜR EIN KRAFTFAHRZEUG UND KRAFTFAHRZEUG
PROCÉDÉ ET SYSTÈME D'AIDE AU STATIONNEMENT POUR VÉHICULE AUTOMOBILE, ET VÉHICULE AUTOMOBILE

(30) Priority: 26.08.2019 CN 201910787367
(43) Date of publication of application: 06.07.2022
(73) Proprietor: Bayerische Motoren Werke Aktiengesellschaft, 80809 München (DE)
(72) Inventor: CHEN, Wangfeng, 80797 München (DE); DE WILLE, Marc, 80935 München (DE); YANG, Haiyang, Shenyang, Liaoning 110027 (CN); UEBLER, Rene, 80999 München (DE)
(86) International application number: PCT/EP2020/073762
(87) International publication number: WO 2021/037859

(56) References cited:
- EP-A2- 1 916 153
- EP-A2- 1 916 177
- DE-A1- 102014 204 316
- GB-A- 2 517 789
- US-A1- 2018 004 020
- US-A1- 2018 056 858
- US-A1- 2019 163 196

## Description

### FIELD OF THE INVENTION

The present invention relates to a parking assisting method and a parking assisting system for a motor vehicle. The present invention also relates to a motor vehicle.

### BACKGROUND OF THE INVENTION

When a driver drives a motor vehicle on the road and finds a parking spot on the side of the road, the driver will turn on a reversing light when reversing the parking spot to indicate the direction of parking. At this time, if the driver of a second motor vehicle also wants to park in this parking spot, but he/she does not clearly get the information that the first driver wants to park (for example, he/she fails to see the reversing lights, or it is not clear which parking spot the first motor vehicle will be parked in when there are two parking spots in parallel), the second motor vehicle might be waiting near the parking spot, which may cause a traffic jam in a short time.

For another example, in a parking lot, when the driver of the first motor vehicle chooses one of several adjacent parking spots and is about to park, if nearby pedestrians or other motor vehicle drivers cannot clearly judge to which parking spot the first motor vehicle driver has chosen, then it would be caused that, pedestrians choose the wrong parking spot to avoid or other motor vehicle drivers choose the parking spot that is about to be parked by the first motor vehicle driver. In this case, great inconvenience is brought to other traffic participants in the parking lot.

The parking assisting methods used in the prior art include: voice prompts, reversing lights, and even a fully automatic parking assisting system that does not require driver operation. However, these methods do not significantly improve the aforementioned phenomenon. For pedestrians or other motor vehicles, information can only be obtained from the reversing lights or sounds of the first motor vehicle itself, but they cannot specifically know which parking spot will be parked in. Especially when there are several parallel parking spots, pedestrians may mistakenly avoid because they cannot specifically determine which parking spot the first motor vehicle chooses, or other motor vehicles temporarily park in inappropriate locations because they cannot determine, so that troubles such as traffic jams or wasted parking time can be brought.

US 2018/004020 A1 relates to an image projection apparatus capable of projecting information onto a road surface and displaying the projected information based on information about a vehicle such as a traveling state of the own vehicle by an image projection apparatus.

DE 10 2014 204316 A1 relates to an optical signal device for a driver-controlled vehicle, comprising at least one optical signal transmitter controlled by a control device.

A system which is operated within a vehicle to indicate an intention of a driver of the vehicle to perform a particular vehicle maneuver is known from US 2018/056858 A1.

EP 1 916 153 A2 discloses a method involving producing a projection object e.g. park symbol, at a projection location outside of a motor vehicle by a projection means. An anticipated, intended domicile of the motor vehicle is marked by the produced projection object in a plane manner. Similarly, EP 1 916 177 A2 discloses a method including producing a virtual target object at a goal position for the motor vehicle in the surrounding by a projection.

GB 2 517 789 A relates to a system for emitting light from a vehicle and projecting the light to create a static or dynamic visible warning, image or icon for communicating with or providing a warning to other users of the road.

US 2019/7163196 A1 relates to an autonomous robot that can be programmed to travel from a first location to second location, and a light projection system that can be used to indicate a robot's path of travel.

However, all of the above prior arts are silent on how to keep a projection image in approximately the same shape and size during a parking process.

In view of this, how to provide a more complete parking assisting method to bring greater convenience to many traffic participants is still a technical problem to be solved by those skilled in the art.

### SAMMURY OF THE INVENTION

In view of this, the technical object of the present invention is to provide a parking assisting method for a motor vehicle, by which pedestrians and other motor vehicles can accurately and quickly identify occupied parking spots and avoid the occupied parking spots in time, so as to avoid the problems about traffic jams and so on.

In order to achieve the above technical object, the technical solution according to the present invention is to provide a parking assisting method for a motor vehicle with the features of claim 1.

According to the method of the present invention, by utilizing the projection means to project an image to the parking spot area where the motor vehicle will be parked, other traffic participants, such as pedestrians or other vehicle drivers can be clearly indicated that the parking spot area will be occupied, so that other traffic participants can clearly and apparently obtain the parking information of the motor vehicle, and timely and effectively avoid the problems about traffic jams, delayed avoidance and so on.

The projection means comprise a projection assembly for projecting the projection image and a support assembly which supports the projection assembly and is deflectable relative to the motor vehicle. In this context, the step of outputting a projection instruction to the projection means includes: providing a deflecting angle of the projection assembly relative to the motor vehicle and/or the support assembly and an imaging size of the projection image projected by the projection assembly, so as to make the projection means adjust the deflecting angle and the imaging size of the projection image. This ensures that, even though the motor vehicle continues to move to the parking spot, the projection image is always presented at a fixed position in the parking spot area with approximately the same size. In addition, this can also ensure that, a clear projection image is always displayed in the parking spot, so as to clearly remind other traffic participants.

The method also includes: choosing at least one image from the images stored in the projection means as the projection image. This enables the user of the motor vehicle to personalizedly select the projection image as needed.

In addition, preferably, the projection image can be a graph and/or a number and/or a character, and/or the projection image can be a static image and/or a dynamic image. The type of image can be determined according to different motor vehicle brands and categories, and also can be determined according to the preferences of the driver. This makes the design of motor vehicles more attractive to consumers.

Preferably, the projection area of the projection image can be located within or near the parking spot area, and in particular the projection area can be coincide with the parking spot area. As a result, other traffic participants, such as pedestrians or other vehicle drivers, can be more clearly indicated that the parking spot area will be occupied, so that other traffic participants can obtain the parking information of the motor vehicle more clearly and apparently. Preferably, the data of the parking spot area can comprise the coordinates of parking spot area of the parking spot area relative to the motor vehicle, especially the projection means. This can easily determine the location of the parking spot area.

In addition, the projection means adopted in the present invention realizes the image projection to the parking spot area, which has a simple structure and is convenient to combine with other devices to realize the parking assisting function.

The technical object of the present invention is also to provide a parking assisting system for a motor vehicle with the features of claim 5.

According to the third aspect of the present invention, a motor vehicle is provided, which can comprise a parking assisting system for a motor vehicle according to the present invention.

According to the fourth aspect of the present invention, an electronic device is provided, which can comprise a memory, a processor, a computer program stored on the memory and operable on the processor, a detection means and a projection means, wherein the computer program comprises instructions which, when executed by the processor, cause the processor to carry out the method according to the first aspect mentioned previously.

According to the fifth aspect of the present invention, a computer readable storage medium is provided, on which the above computer program is stored.

The parking assisting system for a motor vehicle, the motor vehicle, the computer readable storage medium and the electronic device according to the second to fifth aspects of the present invention also correspondingly bring the same advantages as the parking assisting method for a motor vehicle according to the first aspect of the present invention, which will be not discussed again.

In brief, through the parking assisting method, device and system for a motor vehicle and the motor vehicle according to the present invention, the parking efficiency of the motor vehicle is effectively improved, convenience is brought to other traffic participants, and the problems such as traffic jams and wasting parking time due to inability to clearly identify parking spots are solved.

### BRIEF DESCRIPTION OF THE DRAWINGS

In order to make the foregoing objectives, features, and advantages of the present invention more comprehensible, specific embodiments of the present invention are described in detail below with reference to the accompanying drawings. In the drawings:
FIG. 1 shows a schematic diagram of an embodiment of a parking assisting system for a motor vehicle according to the invention;
FIG. 2 shows a schematic diagram of an embodiment of a projection means;
FIG. 3 shows a flowchart of an embodiment of a parking assisting method for a motor vehicle according to the invention;
FIG. 4 shows a schematic diagram of an embodiment in which a motor vehicle with the parking assisting system according to the invention is implementing the parking assisting method according to the invention.

### DETAILED DESCRIPTION OF THE DRAWINGS

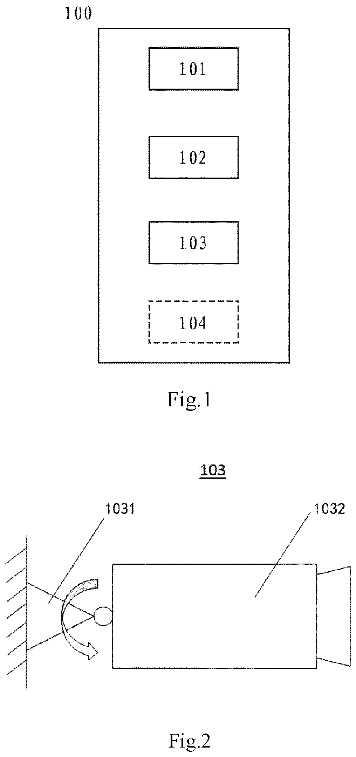

Fig. 1 shows a schematic diagram of an embodiment of a parking assisting system 100 for a motor vehicle according to the present invention. In this embodiment, the parking assisting system 100 comprises a detecting means 101, a parking assisting device 102 for the motor vehicle, and a projection means 103.

The detecting means 101 can comprise at least one sensor, such as a camera, a radar, etc., and can detect data about a parking spot area where the motor vehicle will be parked in. The data of the parking spot area may include the parking spot area coordinates of the parking spot area relative to the motor vehicle, especially the point where the projection means 103 is located.

The parking assisting device 102 for the motor vehicle is configured to obtain data about the parking spot area to be parked by the motor vehicle from the detecting means 101 and to output a projection instruction to the projection means 103 for adjusting the projection means 103 according to the data of the parking spot area.

The projection means 103 receives the projection instruction from the parking assisting device 102 for the motor vehicle and project a projection image to the parking spot area according to the projection instruction, and the projection image is used to indicate that the parking spot area will be occupied. The projection means 103 can especially be arranged at the rear of the motor vehicle. It is also possible to arrange multiple projection means according to actual conditions, which are distributed in different positions in the motor vehicle.

The projection image may be, for example, a graph and/or a number and/or a character. The projection image may also be, for example, a still image and/or a dynamic image (such as a video). For example, a video player can be used, which keeps the projection image displayed in the parking spot area being varied all the time, thereby facilitating passing pedestrians, other motor vehicles and non-motor vehicles to notice that: a vehicle is parking, so please keep your distance, keep away for safety and so on.

FIG. 2 shows a schematic diagram of an embodiment of the projection means 103.

As shown in FIG. 2, the projection means 103 comprises a support assembly 1031, which is deflectable relative to the motor vehicle. The support assembly 1031 can be selected from known embodiments, and, for example, can be designed as a support frame for accommodating e.g. a projection assembly 1032, or can be designed as a hinge support that can fix the entire projection means 103, as long as the support assembly 1031 can change the position of the projection image. In the embodiment of FIG. 2, the support assembly 1031 is designed in the form of the hinge support, one end of which is fixedly connected to the motor vehicle, and the other end of which is pivotally connected to the support assembly 1031.

The projection means 103 includes the projection assembly 1032 for projecting the projection image, and the imaging size of the projection image can be changed by adjusting the projection assembly 1032.

In this case, the parking assisting device 102 may also be configured to provide the projection means 103 with a deflection angle of the projection assembly 1032 relative to the motor vehicle and/or the support assembly 1031 and with an imaging size of the projection image projected by the projection assembly 1032, so as to make the projection means 103 adjust the deflection angle and the imaging size of the projection image.

In addition, as shown in FIG. 1, the parking assisting system 100 further includes a selection device 104, which may be configured to choose at least one image from the images stored in the projection means 103 as the projection image.

In this context, the projection means 103 may include an image display (not shown), which can store at least one image. The user of the motor vehicle can directly select at least one image as the projection image on the image display.

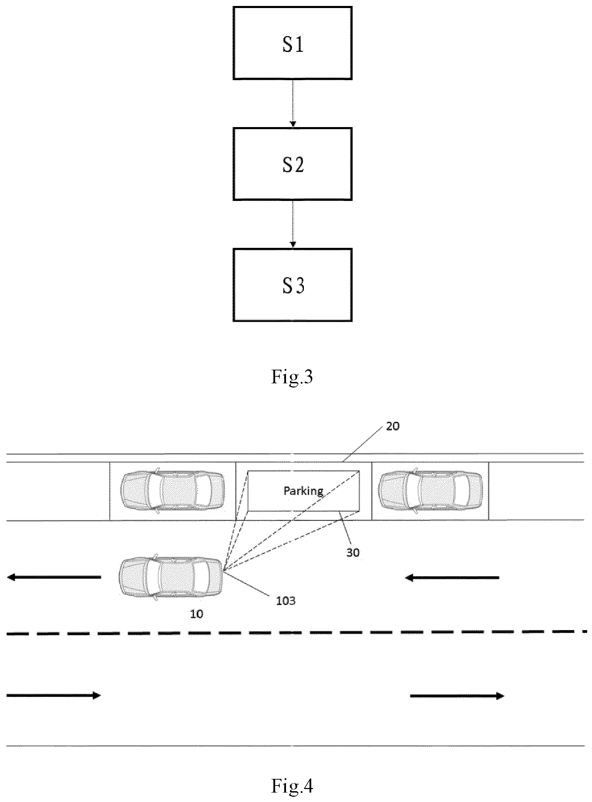

Fig. 3 shows a schematic flowchart of a parking assisting method for a motor vehicle according to the present invention. FIG. 4 exemplarily shows a scenario where the motor vehicle 10 finds out a parking spot and intends to park in the parking spot area 20 occupied by the parking spot. The working mode of the parking assisting device for the motor vehicle according to the present invention will be described in detail below with reference to the example of FIG. 4.

In step S1, data about the parking spot area 20 occupied by the parking spot, where the motor vehicle 10 will be parked, is obtained. The data of the parking spot area 20 especially includes the parking spot area coordinates of the parking spot area 20 relative to the motor vehicle, especially the projection means 103.

In step S2, according to the data of the parking spot area 20, a projection instruction for adjusting the projection means 103 is output to the projection means 103.

In this context, in particular, the projection means 103 can be provided with the deflection angle of the projection assembly 1032 relative to the motor vehicle and/or the support assembly 1031 and the imaging size of the projection image projected by the projection assembly 1032, so as to make the projection means 103 adjust the deflection angle and the imaging size of the projection image.

In step S3, according to the projection instruction, the projection means 103 projects the projection image to the parking spot area 20, and the projection image is used to indicate that the parking spot area 20 will be occupied. The projection image may be a graph and/or a number and/or a character, and/or the projection image may be a still image and/or a dynamic image. In this embodiment, the projection image is a rectangular figure and the text "Parking" is displayed in the middle of the rectangular figure. As a result, pedestrians and other motor vehicles near the parking spot can learn that the parking spot is already occupied or that a vehicle is parking to this parking spot.

Before the step S3, at least one image from the images stored in the projection means 103 is chosen as the projection image.

Preferably, the projection area 30 of the projection image may be located within or near the parking spot area 20 (as shown in FIG. 4). In particular, the projection area 30 may coincide with the parking spot area 20.

In addition, the projection indication may, for example, include data of the projection area 30, such data including but not limited to: the coordinate position of the projection area 30 relative to the parking spot area 20, the area coordinates of the projection area 30 relative to the motor vehicle 10, and/or the angle and the distance, etc.

Since the motor vehicle 10 is continuously moving relative to the parking spot area 20 during the parking process, the data of the projection area 30 is also changing. As the motor vehicle moves slowly, the deflection angle and the imaging size of the projection means 103 can be continuously adjusted. This ensures that during the parking process, no matter how the motor vehicle moves, the projection image projected by the projection means is always displayed on the specific fixed position of the parking spot in approximately the same shape and size.

In addition to the case of parking in the parking spot on the side of the road as shown in Figure 4, the parking assisting method, device and system according to the present invention are also suitable for parking side by side in a parking lot, especially where there are multiple adjacent parking spots. Through the parking assisting method, device and system according to the present invention, other traffic participants can clearly learn which parking spot the motor vehicle specifically chooses to park in.

The principles and implementations of the present invention have been described above through specific examples, but these specific examples are only for explanation and do not limit the protection scope of the present invention. It should be pointed out that, for those skilled in the art, without departing from the principle of the present invention, any improvement and modification of the present invention shall fall within the protection scope of the claims of the present disclosure.

## Claims

1. A parking assisting method for a motor vehicle (10), wherein the motor vehicle (10) is provided with a projection means (103), the method including the following steps:
- obtaining data of a parking spot area (20) to be parked,
- outputting a projection instruction to the projection means (103) for adjusting the projection means (103) according to the data of the parking spot area (20),
- -choosing at least one image from the images stored in the projection means (103) as a projection image,
- projecting the projection image to the parking spot area (20) by the projection means (103) according to the projection instruction, wherein the projection image is provided for indicating that the parking spot area (20) will be occupied,
wherein the projection means (103) comprises a projection assembly (1032) for projecting the projection image and a support assembly (1031) which supports the projection assembly (1032) and is deflectable relative to the motor vehicle (10), the step of outputting a projection instruction to the projection means (103) includes: providing a deflecting angle of the projection assembly (1032) relative to the motor vehicle (10) and/or the support assembly (1031) and an imaging size of the projection image projected by the projection assembly (1032), so as to make the projection means (103) adjust the deflecting angle and the imaging size of the projection image such that the projection image is always presented at a fixed position with approximately the same size when the vehicle moves relative to the parking spot area (20) during the parking process.

2. A parking assisting method according to claim 1, **characterized in that**, the projection area (30) of the projection image is located within or near the parking spot area (20), and in particular the projection area (30) is coincide with the parking spot area (20).

3. A parking assisting method according to any one of claims 1 to 2, **characterized in that**, the data of the parking spot area (20) comprises the coordinates of parking spot area of the parking spot area (20) relative to the motor vehicle (10), especially the projection means (103).

4. A parking assisting method according to any one of claims 1 to 3, **characterized in that**, the projection image is a graph and/or a number and/or a character, and/or the projection image is a static image and/or a dynamic image.

5. A parking assisting system (100) for a motor vehicle (10), the system comprising:
- a detecting means (101) with at least one sensor,
- a parking assisting device (102) for the motor vehicle (10), which is configured to obtain data about a parking spot area (20) to be parked by the motor vehicle (10) from the detecting means (101) and to output a projection instruction to a projection means (103) for adjusting the projection means (103) according to the data of the parking spot area (20),
- a selection device (104), which is configured to choose at least one image from the images stored in the projection means (103) as a projection image; and
- the projection means (103) for projecting the projection image to the parking spot area (20) according to the projection instruction, wherein the projection image is provided for indicating the parking spot area (20) will be occupied,
wherein the projection means (103) comprises a projection assembly (1032) for projecting the projection image and a support assembly (1031) which supports the projection assembly (1032) and is deflectable relative to the motor vehicle (10), the parking assisting device (102) is also configured to provide a deflecting angle of the projection assembly (1032) relative to the motor vehicle (10) and/or the support assembly (1031) and an imaging size of the projection image projected by the projection assembly (1032), so as to make the projection means (103) adjust the deflecting angle and the imaging size of the projection image such that the projection image is always presented at a fixed position with approximately the same size when the vehicle moves relative to the parking spot area (20) during the parking process.

6. A parking assisting system (100) according to claim 5, **characterized in that**, the projection area (30) of the projection image is located within or near the parking spot area (20), and in particular the projection area (30) is coincide with the parking spot area (20).

7. A parking assisting system (100) according to any one of claims 5 to 6, **characterized in that**, the data of the parking spot area (20) comprises the coordinates of parking spot area of the parking spot area (20) relative to the motor vehicle (10), especially the projection means (103).

8. A parking assisting system (100) according to any one of claims 5 to 7, **characterized in that**, the projection image is a graph and/or a number and/or a character, and/or the projection image is a static image and/or a dynamic image.

9. A motor vehicle (10), which comprises a parking assisting system (100) for a motor vehicle (10) according to any one of claims 5 to 8.

10. An electronic device, comprising a memory, a processor, a computer program stored on the memory and operable on the processor, a detecting means (101) and a projection means (103), wherein the computer program comprises instructions which, when executed by the processor, cause the processor to carry out the method according to any one of claims 1 to 4.

11. A computer readable storage medium, on which the computer program of claim 10 is stored.

## Patentansprüche

1. Parkassistenzverfahren für ein Kraftfahrzeug (10), wobei das Kraftfahrzeug (10) mit einem Projektionsmittel (103) versehen ist, wobei das Verfahren die folgenden Schritte umfasst:
• Erlangen von Daten eines zu beparkenden Parkplatzbereichs (20),
• Ausgeben einer Projektionsanweisung an das Projektionsmittel (103) zum Einstellen des Projektionsmittels (103) gemäß den Daten des Parkplatzbereichs (20),
• Auswählen mindestens eines Bildes aus den im Projektionsmittel (103) gespeicherten Bildern als Projektionsbild,
• Projizieren des Projektionsbildes auf den Parkplatzbereich (20) durch das Projektionsmittel (103) gemäß der Projektionsanweisung, wobei das Projektionsbild zum Anzeigen vorgesehen ist, dass der Parkplatzbereich (20) belegt werden wird, wobei das Projektionsmittel (103) eine Projektionsanordnung (1032) zum Projizieren des Projektionsbildes und eine Trägeranordnung (1031) umfasst, welche die Projektionsanordnung (1032) trägt und relativ zum Kraftfahrzeug (10) auslenkbar ist, wobei der Schritt des Ausgebens einer Projektionsanweisung an das Projektionsmittel (103) umfasst: Bereitstellen eines Auslenkwinkels der Projektionsanordnung (1032) relativ zum Kraftfahrzeug (10) und/oder der Trägeranordnung (1031) und einer Abbildungsgröße des durch die Projektionsanordnung (1032) projizierten Projektionsbildes, um das Projektionsmittel (103) zu veranlassen, den Auslenkwinkel und die Abbildungsgröße des Projektionsbildes derart einzustellen, dass das Projektionsbild während des Parkvorgangs stets an einer festen Position mit annähernd derselben Größe dargestellt wird, wenn sich das Fahrzeug relativ zum Parkplatzbereich (20) bewegt.

2. Parkassistenzverfahren nach Anspruch 1, **dadurch gekennzeichnet, dass** der Projektionsbereich (30) des Projektionsbildes innerhalb oder in der Nähe des Parkplatzbereichs (20) liegt, und insbesondere der Projektionsbereich (30) mit dem Parkplatzbereich (20) übereinstimmt.

3. Parkassistenzverfahren nach einem der Ansprüche 1 bis 2, **dadurch gekennzeichnet, dass** die Daten des Parkplatzbereichs (20) die Koordinaten des Parkplatzbereichs des Parkplatzbereichs (20) relativ zum Kraftfahrzeug (10), insbesondere dem Projektionsmittel (103), umfassen.

4. Parkassistenzverfahren nach einem der Ansprüche 1 bis 3, **dadurch gekennzeichnet, dass** das Projektionsbild eine Grafik und/oder eine Zahl und/oder ein Zeichen ist, und/oder das Projektionsbild ein statisches Bild und/oder ein dynamisches Bild ist.

5. Parkassistenzsystem (100) für ein Kraftfahrzeug (10), wobei das System umfasst:
• ein Erfassungsmittel (101) mit mindestens einem Sensor,
• eine Parkassistenzvorrichtung (102) für das Kraftfahrzeug (10), welche dazu ausgebildet ist, Daten über einen durch das Kraftfahrzeug (10) zu beparkenden Parkplatzbereich (20) vom Erfassungsmittel (101) zu erlangen und eine Projektionsanweisung an ein Projektionsmittel (103) zum Einstellen des Projektionsmittels (103) gemäß den Daten des Parkplatzbereichs (20) auszugeben,
• eine Auswahlvorrichtung (104), welche dazu ausgebildet ist, mindestens ein Bild aus den im Projektionsmittel (103) gespeicherten Bildern als Projektionsbild auszuwählen; und
• das Projektionsmittel (103) zum Projizieren des Projektionsbildes auf den Parkplatzbereich (20) gemäß der Projektionsanweisung, wobei das Projektionsbild zum Anzeigen vorgesehen ist, dass der Parkplatzbereich (20) belegt werden wird, wobei das Projektionsmittel (103) eine Projektionsanordnung (1032) zum Projizieren des Projektionsbildes und eine Trägeranordnung (1031) umfasst, welche die Projektionsanordnung (1032) trägt und relativ zum Kraftfahrzeug (10) auslenkbar ist, wobei die Parkassistenzvorrichtung (102) auch dazu ausgebildet ist, einen Auslenkwinkel der Projektionsanordnung (1032) relativ zum Kraftfahrzeug (10) und/oder der Trägeranordnung (1031) und eine Abbildungsgröße des durch die Projektionsanordnung (1032) projizierten Projektionsbildes bereitzustellen, um das Projektionsmittel (103) zu veranlassen, den Auslenkwinkel und die Abbildungsgröße des Projektionsbildes derart einzustellen, dass das Projektionsbild während des Parkvorgangs stets an einer festen Position mit annähernd derselben Größe dargestellt wird, wenn sich das Fahrzeug relativ zum Parkplatzbereich (20) bewegt.

6. Parkassistenzsystem (100) nach Anspruch 5, **dadurch gekennzeichnet, dass** der Projektionsbereich (30) des Projektionsbildes innerhalb oder in der Nähe des Parkplatzbereichs (20) liegt, und insbesondere der Projektionsbereich (30) mit dem Parkplatzbereich (20) übereinstimmt.

7. Parkassistenzsystem (100) nach einem der Ansprüche 5 bis 6, **dadurch gekennzeichnet, dass** die Daten des Parkplatzbereichs (20) die Koordinaten des Parkplatzbereichs des Parkplatzbereichs (20) relativ zum Kraftfahrzeug (10), insbesondere dem Projektionsmittel (103), umfassen.

8. Parkassistenzsystem (100) nach einem der Ansprüche 5 bis 7, **dadurch gekennzeichnet, dass** das Projektionsbild eine Grafik und/oder eine Zahl und/oder ein Zeichen ist, und/oder das Projektionsbild ein statisches Bild und/oder ein dynamisches Bild ist.

9. Kraftfahrzeug (10), welches ein Parkassistenzsystem (100) für ein Kraftfahrzeug (10) nach einem der Ansprüche 5 bis 8 umfasst.

10. Elektronische Vorrichtung, umfassend einen Speicher, einen Prozessor, ein auf dem Speicher gespeichertes und auf dem Prozessor lauffähiges Computerprogramm, ein Erfassungsmittel (101) und ein Projektionsmittel (103), wobei das Computerprogramm Anweisungen umfasst, welche, wenn sie durch den Prozessor ausgeführt werden, den Prozessor veranlassen, das Verfahren nach einem der Ansprüche 1 bis 4 auszuführen.

11. Computerlesbares Speichermedium, auf welchem das Computerprogramm nach Anspruch 10 gespeichert ist.

## Revendications

1. Procédé d'assistance au stationnement pour un véhicule à moteur (10), dans lequel le véhicule à moteur (10) est pourvu d'un moyen de projection (103), le procédé comprenant les étapes suivantes :
• obtention de données d'une zone de place de stationnement (20) à stationner,
• émission d'une instruction de projection au moyen de projection (103) pour ajuster le moyen de projection (103) selon les données de la zone de place de stationnement (20),
• choix d'au moins une image parmi les images stockées dans le moyen de projection (103) en tant qu'image de projection,
• projection de l'image de projection sur la zone de place de stationnement (20) par le moyen de projection (103) selon l'instruction de projection, dans lequel l'image de projection est prévue pour indiquer que la zone de place de stationnement (20) sera occupée,
dans lequel le moyen de projection (103) comprend un ensemble de projection (1032) pour projeter l'image de projection et un ensemble de support (1031) qui supporte l'ensemble de projection (1032) et est déviable par rapport au véhicule à moteur (10),
dans lequel l'étape d'émission d'une instruction de projection au moyen de projection (103) comprend : la fourniture d'un angle de déviation de l'ensemble de projection (1032) par rapport au véhicule à moteur (10) et/ou à l'ensemble de support (1031) et d'une taille d'image de l'image de projection projetée par l'ensemble de projection (1032), de manière à faire ajuster par le moyen de projection (103) l'angle de déviation et la taille d'image de l'image de projection de telle sorte que l'image de projection soit toujours présentée à une position fixe avec approximativement la même taille lorsque le véhicule se déplace par rapport à la zone de place de stationnement (20) pendant le processus de stationnement.

2. Procédé d'assistance au stationnement selon la revendication 1, **caractérisé en ce que** la zone de projection (30) de l'image de projection est située à l'intérieur ou à proximité de la zone de place de stationnement (20), et en particulier la zone de projection (30) coïncide avec la zone de place de stationnement (20).

3. Procédé d'assistance au stationnement selon l'une quelconque des revendications 1 à 2, **caractérisé en ce que** les données de la zone de place de stationnement (20) comprennent les coordonnées de zone de place de stationnement de la zone de place de stationnement (20) par rapport au véhicule à moteur (10), en particulier le moyen de projection (103).

4. Procédé d'assistance au stationnement selon l'une quelconque des revendications 1 à 3, **caractérisé en ce que** l'image de projection est un graphique et/ou un nombre et/ou un caractère, et/ou l'image de projection est une image statique et/ou une image dynamique.

5. Système d'assistance au stationnement (100) pour un véhicule à moteur (10), le système comprenant :
• un moyen de détection (101) avec au moins un capteur,
• un dispositif d'assistance au stationnement (102) pour le véhicule à moteur (10), qui est configuré pour obtenir des données concernant une zone de place de stationnement (20) à stationner par le véhicule à moteur (10) à partir du moyen de détection (101) et pour émettre une instruction de projection à un moyen de projection (103) pour ajuster le moyen de projection (103) selon les données de la zone de place de stationnement (20),
• un dispositif de sélection (104), qui est configuré pour choisir au moins une image parmi les images stockées dans le moyen de projection (103) en tant qu'image de projection ; et
• le moyen de projection (103) pour projeter l'image de projection sur la zone de place de stationnement (20) selon l'instruction de projection, dans lequel l'image de projection est prévue pour indiquer que la zone de place de stationnement (20) sera occupée,
dans lequel le moyen de projection (103) comprend un ensemble de projection (1032) pour projeter l'image de projection et un ensemble de support (1031) qui supporte l'ensemble de projection (1032) et est déviable par rapport au véhicule à moteur (10),
dans lequel le dispositif d'assistance au stationnement (102) est également configuré pour fournir un angle de déviation de l'ensemble de projection (1032) par rapport au véhicule à moteur (10) et/ou à l'ensemble de support (1031) et une taille d'image de l'image de projection projetée par l'ensemble de projection (1032), de manière à faire ajuster par le moyen de projection (103) l'angle de déviation et la taille d'image de l'image de projection de telle sorte que l'image de projection soit toujours présentée à une position fixe avec approximativement la même taille lorsque le véhicule se déplace par rapport à la zone de place de stationnement (20) pendant le processus de stationnement.

6. Système d'assistance au stationnement (100) selon la revendication 5, **caractérisé en ce que** la zone de projection (30) de l'image de projection est située à l'intérieur ou à proximité de la zone de place de stationnement (20), et en particulier la zone de projection (30) coïncide avec la zone de place de stationnement (20).

7. Système d'assistance au stationnement (100) selon l'une quelconque des revendications 5 à 6, **caractérisé en ce que** les données de la zone de place de stationnement (20) comprennent les coordonnées de zone de place de stationnement de la zone de place de stationnement (20) par rapport au véhicule à moteur (10), en particulier le moyen de projection (103).

8. Système d'assistance au stationnement (100) selon l'une quelconque des revendications 5 à 7, **caractérisé en ce que** l'image de projection est un graphique et/ou un nombre et/ou un caractère, et/ou l'image de projection est une image statique et/ou une image dynamique.

9. Véhicule à moteur (10), qui comprend un système d'assistance au stationnement (100) pour un véhicule à moteur (10) selon l'une quelconque des revendications 5 à 8.

10. Dispositif électronique, comprenant une mémoire, un processeur, un programme informatique stocké sur la mémoire et exécutable sur le processeur, un moyen de détection (101) et un moyen de projection (103), dans lequel le programme informatique comprend des instructions qui, lorsqu'elles sont exécutées par le processeur, amènent le processeur à exécuter le procédé selon l'une quelconque des revendications 1 à 4.

11. Support de stockage lisible par ordinateur, sur lequel le programme informatique selon la revendication 10 est stocké.
